# EUROPÄISCHE PATENTANMELDUNG

(11) **EP 2 233 352 A1**
(43) Veröffentlichungstag der Anmeldung: **29.09.2010**
(21) Anmeldenummer: 09155972.4
(22) Anmeldetag: 24.03.2009
(51) Int. Cl.: B60N 2/68, B29C 45/17, B60R 22/26

(54) **Tragstruktur für eine Rückenlehne**

(71) Anmelder: BASF SE, 67056 Ludwigshafen (DE); Bayerische Motoren Werke Aktiengesellschaft, 80809 München (DE)
(72) Erfinder: Petry, Markus, 67259 Großniedesheim (DE); Schmid, Jochen, 69221 Dossenheim (DE); Nachtigäller, Tobias, 68161 Mannheim (DE); Bischer, Mathias, 68642 Bürstadt (DE); Klenz, Rainer, 67454 Haßloch (DE); Kolesnik, Sergej, 83043 Bad Aibing (DE)
(74) Vertreter: Huhn, Michael

(57) **Zusammenfassung**

Die Erfindung betrifft eine Tragstruktur für eine Rückenlehne eines Sitzes in einem Kraftfahrzeug aus einem Polymermaterial, wobei an mindestens einer sich von oben nach unten erstreckenden Seite (9, 11) der Tragstruktur (1) ein Hohlprofil (5, 7) ausgebildet ist, das durch ein kombiniertes Gasinnendruck- und Wasserinjektionsverfahren gefertigt wird. Die Erfindung betrifft weiterhin ein Verfahren zur Herstellung einer Tragstruktur (1) für eine Rückenlehne eines Sitzes in einem Kraftfahrzeug, bei dem die Tragstruktur (1) aus einem Polymermaterial durch ein Spritzgießverfahren geformt wird, ein Gas unter Druck zur Ausformung mindestens eines Hohlprofils (5, 7) entlang mindestens einer Seite (9, 11) der Tragstruktur (1) eingedüst wird und eine Flüssigkeit unter Druck in das mindestens eine Hohlprofil (5, 7) eingespritzt wird.

## Beschreibung

Die Erfindung betrifft eine Tragstruktur für eine Rückenlehne eines Sitzes in einem Kraftfahrzeug aus einem Polymermaterial.

Da an Tragstrukturen für Rückenlehen in Kraftfahrzeugen hohe Anforderungen an die Stabilität gestellt werden, zum Beispiel damit diese im Falle eines Unfalls mit dem Kraftfahrzeug nicht versagen, werden die Tragstrukturen üblicherweise aus Metallen gefertigt. Diese Tragstrukturen weisen daher ein hohes Gewicht auf. Jedoch ist es gewünscht, das Gewicht eines Kraftfahrzeuges zu reduzieren, um so auch den Verbrauch zu minimieren. Eine Reduktion des Gewichtes ist zum Beispiel möglich durch Verwendung anderer Materialien.

So ist es z. B. aus DE-A 42 08 150 bekannt, eine Tragstruktur für eine Rückenlehne eines Fahrzeugsitzes aus einem faserverstärkten Kunststoff zu fertigen. Bei der Tragstruktur sind zwei Biegeträger über mindestens einen Querträger und/oder mindestens über einen Diagonalträger miteinander verbunden, so dass auch bei einer einseitigen Belastung eines Biegeträgers der andere Biegeträger die Belastung mitträgt. Die Biegeträger sind als Hohlprofile gestaltet und werden vorzugsweise in zweischaliger Bauweise ausgeführt. Zur Herstellung der Träger werden faserverstärkte Duroplaste auf Laminierformen laminiert. Die Faserverstärkung des Kunststoffmaterials erfolgt durch Endlosfasern.

Eine Tragstruktur für eine Rückenlehne ist ebenfalls aus DE-A 38 41 532 bekannt. Bei dieser werden die Tragstrukturen durch ein Spritzgussverfahren gefertigt. Die Tragstruktur umfasst einen die Struktur kassettenartig umgebenden Rahmen, der aus U-profilartigen, seitlich offenen Seitenholmen sowie einem einseitig offenen, U-profilartigen Querholm besteht. Zur Verstärkung können in dem U-profilartigen Holm Rippen angeordnet sein.

Eine Tragstruktur, wie sie zum Beispiel für eine Rücksitzlehne eingesetzt werden kann, ist in DE-A 196 25 785 beschrieben. Die Tragstruktur ist ebenfalls aus einem faserverstärkten Kunststoff gefertigt. In das textile Gewebe des faserverstärkten Kunststoffs sind örtlich verstärkte Bereiche eingebracht, die im Wesentlichen eine X-, Y- oder V-förmige Gestalt aufweisen. Als Fasermaterial werden insbesondere Hybridfasern eingesetzt.

Ein Nachteil der beschriebenen Rückenlehnen ist, dass jeweils Endlosfasern verwendet werden. Diese müssen zur Herstellung jeweils zunächst in die Form eingelegt werden, bevor der Kunststoff eingebracht werden kann.

Aus EP-A 1 946 962 ist eine Sitzstruktur für ein Fahrzeugsitz aus einem Kunststoff bekannt, die eine Rückenlehne und eine Sitzfläche umfasst, die einteilig miteinander verbunden sind. Bei der Sitzstruktur ist entlang der Rückenlehne und der Sitzfläche mindestens ein Hohlprofil ausgebildet. Das Hohlprofil wird durch ein kombiniertes Gasinnendruck- und Wasserinjektionsverfahren hergestellt. Als Kunststoff wird zum Beispiel ein faserverstärkter Kunststoff, der Kurzglasfasern enthält, eingesetzt.

Nachteil des beschriebenen Sitzes ist jedoch, dass Rückenlehne und Sitz einteilig miteinander verbunden sind. Eine Einstellung ist somit nicht möglich, auch kann die Rückenlehne z.B. zur Vergrößerung der Ladefläche bei einer Rücksitzbank nicht umgeklappt werden.

Aufgabe der vorliegenden Erfindung ist es, eine Tragstruktur für eine Rückenlehne eines Sitzes in einem Kraftfahrzeug bereitzustellen, die sich auf einfache Weise herstellen lässt, in Personenkraftfahrzeugen eingesetzt werden kann und eine ausreichende Stabilität aufweist.

Gelöst wird die Aufgabe durch eine Tragstruktur für eine Rückenlehne eines Sitzes in einem Kraftfahrzeug aus einem Polymermaterial, wobei an mindestens einer sich von oben nach unten erstreckenden Seite der Tragstruktur ein Hohlprofil ausgebildet ist, das durch ein kombiniertes Gasinnendruck- und Wasserinjektionsverfahren gefertigt wird.

Durch die Verwendung eines Polymermaterials weist die Tragstruktur ein geringes Gewicht auf. Vorteil des Einsatzes eines kombinierten Gasinnendruck- und Wasserinjektionsverfahrens zur Ausbildung der Hohlprofile ist, dass sich im Bereich des Hohlprofils hohe Wandstärken, gerichtete Faserorientierungen und gleichmäßige Wanddickenverteilungen einstellen lassen. Dies führt zu einem gleichmäßigen Aufbau der Tragstruktur und so zur Vermeidung von Schwachstellen im Lehnenaufbau. Ein weiterer Vorteil ist, dass sich die Tragstruktur in einem Produktionsschritt herstellen lässt.

Das mindestens eine Hohlprofil kann auf der Vorderseite der Tragstruktur oder auf der Rückseite der Tragstruktur ausgebildet sein. Auch ist es möglich, dass sich eine Rückfläche der Tragstruktur zwischen den Hohlprofilen erstreckt, so dass diese sowohl nach vorne als auch nach hinten aus der Tragstruktur herausragen. Bevorzugt ist es jedoch, dass das mindestens eine Hohlprofil an der Vorderseite der Tragstruktur angeordnet ist. Dies führt zu einer glatten Rückseite der Tragstruktur, wodurch z.B. eine zusätzliche Verkleidung der Tragstruktur auf ihrer Rückseite entfallen kann.

Um die Tragstruktur für einen Sitz zu nutzen, wird an der Tragstruktur ein Polster befestigt und dieses mit einem Bezug überzogen. Das Polster kann bei der Ausbildung der Hohlprofile an der Vorderseite zwischen den Hohlprofilen positioniert werden. Auch kann das Polster über die Hohlprofile gezogen werden. Die Hohlprofile können somit gleichzeitig für einen verbesserten Seitenhalt auf dem Fahrzeugsitz, der mit der erfindungsgemäßen Tragstruktur ausgestattet ist, dienen.

Um den Bezug, der über das Polster der Tragstruktur gezogen wird, an der Tragstruktur zu befestigen, ist es zum Beispiel möglich, an der Rückseite der Tragstruktur eine Nut vorzusehen, in die der Bezug eingespannt wird. Üblicherweise ist eine solche Nut umlaufend um die Tragstruktur ausgebildet.

Die erfindungsgemäß ausgebildete Tragstruktur kann sowohl für Vordersitze als auch für Rücksitze in einem Kraftfahrzeug genutzt werden. Wenn das Fahrzeug mehr als eine Rücksitzreihe umfasst, so kann die Tragstruktur für jede der Rücksitzreihen genutzt werden. Bei einer geteilt umklappbaren Rückenlehne oder Rücksitzbank oder bei einer Rücksitzbank mit längsverschiebbarer Sitzstruktur und bei Verwendung der Tragstruktur für Fahrer und/oder Beifahrersitz ist jeweils mindestens eine Seite der Tragstruktur freistehend. Freistehend im Sinne der vorliegenden Erfindung bedeutet, dass die Tragstruktur nicht über Befestigungsmittel mit der Fahrzeugkarosserie verbunden ist. Durch die Verwendung der Hohlprofile, die durch das kombinierte Gasinnendruck- und Wasserinjektionsverfahren hergestellt werden, wird eine hinreichende Stabilität erzielt.

Das Polymermaterial, aus dem die Tragstruktur gefertigt ist, ist z.B. ausgewählt aus der Gruppe bestehend aus Polyolefinen, Styrolpolymere, Polymere der (Meth-)Acrylsäure und ihrer Derivate, Polycarbonate, Polyoxymethylen, Polyaromate, Polyamide, Polyester und Polyurethane.

Als Polyolefine eignen sich z.B. Polyethylen und Polypropylen.

Geeignete Styrolpolymere sind z.B. Styrolcopolymere, wie Styrol-Acrylnitril-Copolymere. Auch können kautschukmodifiziertes Polystyrol oder kautschukmodifizierte Styrolcopolymere eingesetzt werden.

Polymere der (Meth-)Acrylsäure und ihrer Derivate sind im Sinne in der vorliegenden Erfindung z.B. Polyacrylsäure, Poly(meth)acrylsäureester, Polyacrylate, Polymethylmethacrylat und Polyacrylamid.

Polyaromate im Sinne der vorliegenden Erfindung sind z.B. Polyphenylensulfid, Polyethersulfone, Polyetherketone, Polyimide, Polychinoxaline, Polychinoline und Polybenzimidazole.

Als Polyamide eignen sich insbesondere Polyamid 66 und Polyamid 6 sowie Polyaramide.

Geeignete Polyester sind z.B. Polyethylenterephthalat, Polybutylenterephthalat und Polypropylenterephthalat.

Geeignete Polyurethane umfassen Polyisocyanate und Polyole, beispielsweise Polyetherpolyole und Polyesterpolyole.

Vorzugsweise ist das Polymermaterial für die Tragstruktur ausgewählt aus der Gruppe bestehend aus Polyamid, Polycarbonat, Polybutylenterephthalat, Polyethylenterephthalat, Polyethylen, Polypropylen, Styrolpolymere, Polyaramide, Polyurethane.

Im Sinne der vorliegenden Erfindung besonders geeignet sind Polyamide. Davon ganz besonders bevorzugt sind Polyamid 66 und Polyamid 6.

Das Polymermaterial kann verstärkt oder unverstärkt eingesetzt werden. Zur Erhöhung der Stabilität ist es jedoch bevorzugt, dass das Polymermaterial verstärkt ist. Zur Verstärkung werden üblicherweise Fasern eingesetzt. Die Fasern können als Endlosfasern, beispielsweise in Form von Geweben, Gestricken oder Rovings, als Langfasern oder als Kurzfasern eingesetzt werden. Bevorzugt ist die Verwendung von Kurzfasern.

Geeignete Fasern sind z.B. Kohlenstofffasern, Glasfasern und Aramidfasern. Bevorzugt sind Glasfasern. Ganz besonders bevorzugt werden zur Verstärkung Kurzglasfasern eingesetzt.

Wenn auf die Tragstruktur keine zusätzliche Abdeckung angebracht werden soll, ist es bevorzugt, als Polymermaterial ein Polyamid einzusetzen, da dies den ästhetischen Anforderungen an eine Oberfläche genügt.

Wenn die Tragstruktur als Rückenlehne für Rücksitze in einem Kraftfahrzeug eingesetzt wird, die nur von einem Kofferraum des Kraftfahrzeugs aus zugänglich sind und vom Innenraum aus nicht eingesehen werden können, ist auch eine niedrigere Oberflächenqualität ausreichend. Bevorzugt ist es jedoch, die Rückenlehne aus einem Polymermaterial zu fertigen, das den hohen ästhetischen Anforderungen für eine sichtbare Oberfläche genügt.

Für eine ausreichende Stabilität der Tragstruktur, insbesondere, wenn diese an mindestens an einer Seite freistehend ist, ist es vorteilhaft, wenn auf beiden Seiten der Tragstruktur Hohlprofile ausgebildet sind und die Tragstruktur weiterhin Querrippen aufweist, die sich zwischen den Hohlprofilen erstrecken. Durch die zusätzlichen Querrippen wird die Stabilität der Tragstruktur weiter erhöht. Die Querrippen können dabei waagerecht oder diagonal zwischen den Hohlprofilen verlaufen. Wenn die Querrippen diagonal verlaufen, so ist es möglich, eine Struktur aus sich überkreuzenden Querrippen vorzusehen. Auch bei waagerecht verlaufenden Querrippen ist es weiterhin möglich, zusätzliche Rippen vorzusehen, die parallel zu den Hohlprofilen verlaufen und so ebenfalls eine kreuzförmige Struktur auszubilden.

Üblicherweise werden an eine Rückenlehne in einem Kraftfahrzeug zusätzliche Anbauteile angebracht. Derartige Anbauteile sind z.B. Kopfstützen oder, wenn die Rückenlehne als Mittellehne einer Rücksitzbank eingesetzt wird, auch ein Gurtsystem. Für eine ausreichende Breite des Mittelsitzes ist es vorteilhaft, wenn das Gurtsystem an die Rückenlehne angebracht wird, die zur Mittellehne benachbart ist. Bevorzugt ist es somit, insbesondere wenn die Tragstruktur als Rückenlehne für eine Rücksitzbank eingesetzt wird, dass die Tragstruktur eine Vorrichtung zur Aufnahme eines Gurtsystems umfasst.

Neben der Vorrichtung zur Aufnahme eines Gurtsystems kann die Tragstruktur weiterhin eine Vorrichtung zur Aufnahme von Kopfstützen, ein Entriegelungssystem, beispielsweise zur Verbindung der Tragstruktur mit der Fahrzeugkarosserie sowie beispielsweise auch Haken für eine Kindersitzanbindung umfassen.

Um den Anforderungen an die Stabilität einer Tragstruktur für einen Kraftfahrzeugsitz zu genügen, ist es bevorzugt, wenn die Tragstruktur eine Wandstärke im Bereich von 1 bis 10 mm, bevorzugt im Bereich von 2 bis 4 mm und das hohe Profil einen Außendurchmesser bzw. eine äußere Kantenlänge bei nicht rundem Querschnitt im Bereich von 10 bis 80 mm, bevorzugt im Bereich von 30 bis 60 mm und eine Wandstärke im Bereich von 3 bis 10 mm, bevorzugt im Bereich von 4 bis 6 mm aufweist.

Die Erfindung betrifft weiterhin ein Verfahren zur Herstellung einer solchen Tragstruktur.

Das Verfahren zur Herstellung einer entsprechenden Tragstruktur umfasst folgende Schritte:
(a) Formen der Tragstruktur aus dem Polymermaterial durch ein Spritzgussverfahren,
(b) Eindüsen eines Gases unter Druck zur Ausformung mindestens eines Hohlprofils entlang mindestens einer Seite der Tragstruktur,
(c) Einspritzen einer Flüssigkeit unter Druck in das mindestens eine Hohlprofil.

Das Eindüsen des Gases unter Druck in Schritt (b) und das Einspritzen der Flüssigkeit in Schritt (c) erfolgt üblicherweise gleichzeitig.

Um den Ausschuss an überschüssigem Polymermaterial möglichst gering zu halten, wird die Tragstruktur vorzugsweise durch ein Masserückdrückverfahren gefertigt. Beim Masserückdrückverfahren wird die beim Eindüsen des Gases überschüssige Schmelze des Polymermaterials wieder in einen Heißkanal der Spritzgießmaschine zurück gedrückt. Bei der Herstellung der nächsten Tragstruktur kann dann die Schmelze des Polymermaterials wieder in die Form eingepresst werden.

Das Gas, das unter Druck eingedüst wird, um das mindestens eine Hohlprofil auszubilden, ist vorzugsweise gegenüber dem Polymermaterial inert. Als Gase eignen sich z.B. Luft- oder Stickstoff.

Die Flüssigkeit, die unter Druck in das mindestens eine in Schritt (b) ausgeformte Hohlprofil eingespritzt wird, ist vorzugsweise Wasser.

Ausführungsbeispiele der Erfindung sind in den Zeichnungen dargestellt und werden in der nachfolgenden Beschreibung näher erläutert.

Es zeigen:
- Figur 1: eine dreidimensionale Darstellung einer Tragstruktur für eine Rückenlehne eines Rücksitzes,
- Figur 2: eine dreidimensionale Darstellung einer Tragstruktur für eine Rückenlehne eines Kraftfahrzeugs in einer zweiten Ausführungsform,
- Figur 3: eine dreidimensionale Schnittdarstellung durch eine Tragstruktur einer Rückenlehne eines Kraftfahrzeugs.

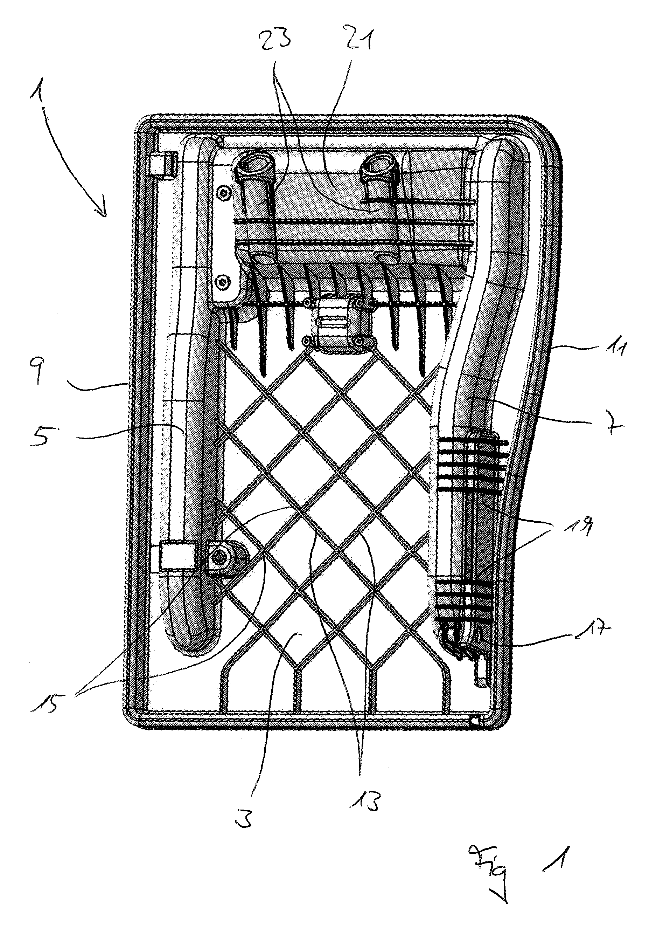

Figur 1 zeigt eine dreidimensionale Darstellung einer Tragstruktur für eine Rücklehne eines Rücksitzes, wie sie in einem Kraftfahrzeug eingesetzt wird.

Eine Tragstruktur 1 umfasst eine Rückenplatte 3, auf der ein erstes Hohlprofil 5 und ein zweites Hohlprofil 7 ausgebildet sind. Das erste Hohlprofil 5 erstreckt sich parallel zu einer ersten Seite 9 der Rückenplatte 3 und das zweite Hohlprofil 7 entlang einer zweiten Seite 11 der Rückenplatte 3 jeweils von oben nach unten.

Das erste Hohlprofil 5 und das zweite Hohlprofil 7 werden durch ein kombiniertes Gasinnendruck-/Wasserinjektionsverfahren gefertigt. Hierzu wird über eine Öffnung auf der Rückseite der Rückenplatte 3 zunächst Gas injiziert und anschließend eine Flüssigkeit. Hierdurch wird die Schmelze gegen eine Form gedrückt und überschüssige Schmelze aus dem Inneren entfernt, so dass ein Hohlprofil entsteht.

Zur weiteren Stabilisierung erstrecken sich zwischen dem ersten Hohlprofil 5 und dem zweiten Hohlprofil 7 Querrippen 13. Die Querrippen 13 verlaufen in der hier dargestellten Ausführungsform diagonal von links oben nach rechts unten bzw. von rechts oben nach links unten. Hierdurch ergibt sich eine Struktur der Querrippen 13, bei der sich die Querrippen 13 jeweils an Kreuzungspunkten 15 kreuzen.

Um ein Einstellen der Rückenlehne zu ermöglichen bzw. die Rückenlehne umklappen zu können, weist die Tragstruktur 1 einen Beschlag 17 auf, mit dem die Tragstruktur 1 mit einer Sitzfläche über eine Gelenkstruktur verbunden werden kann. Eine stabile Verbindung wird dadurch erzielt, dass der Beschlag 17 über Querrippen 19 mit dem zweiten Hohlprofil 7 verbunden ist.

Am oberen Ende weist die Tragstruktur 1 eine Vorrichtung 21 zur Aufnahme einer Kopfstütze auf. Die Vorrichtung 21 zur Aufnahme einer Kopfstütze umfasst in der hier dargestellten Ausführungsform zwei Hülsen 23, durch die Befestigungsstangen einer Kopfstütze gesteckt werden können.

Die Hohlprofile 5,7 sind in der hier dargestellten Ausführungsform auf der Vorderseite der Rückenplatte 3 ausgebildet. Hierdurch ergibt sich eine im Wesentlichen ebene Rückseite der Rückenplatte 3, so dass es z.B. nicht notwendig ist, die Rückseite abzudecken, wenn geeignete Polymere eingesetzt werden. Bei geeigneten Polymeren genügt die ebene Rückseite der Rückenplatte 3 den ästhetischen Anforderungen an die Oberfläche einer solchen Tragstruktur 1.

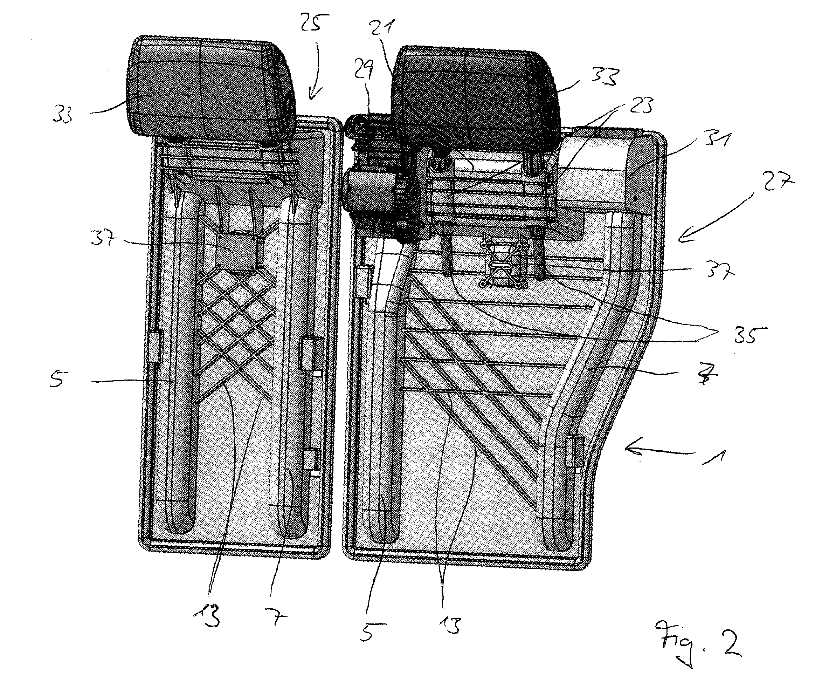

Die Figur 2 zeigt eine dreidimensionale Darstellung einer Tragstruktur 1 für eine Rückenlehne eines Kraftfahrzeugs in einer zweiten Ausführungsform.

Ebenso wie die in Figur 1 dargestellte Ausführungsform ist die in Figur 2 dargestellte Ausführungsform für eine Rückenlehne eines Rücksitzes eines Kraftfahrzeugs konzipiert. Von der in Figur 1 dargestellten Ausführungsform unterscheidet sich die in Figur 2 dargestellte Ausführungsform zum einen dadurch, dass ein zusätzliches mittleres Lehnenelement 25 vorgesehen ist. Der Aufbau des zusätzlich mittleren Lehnenelements 25 entspricht im Wesentlichen dem in Figur 1 dargestellten Aufbau eines äußeren Lehnenelements.

Im Unterschied zu dem in Figur 1 dargestellten Lehnenelement weist das äußere Lehnenelement 27 in Figur 2 eine Vorrichtung 29 zur Aufnahme eines Gurtsystems auf. Dieses umfasst insbesondere einen Gurtretraktor und Mittel zur Aufnahme des Gurtes. Die Vorrichtung 29 zur Aufnahme eines Gurtsystems wird nach Herstellung der Tragstruktur 1 mit der Tragstruktur 1 verbunden. Hierzu ist es z.B. möglich, die Vorrichtung 29 zur Aufnahme eines Gurtsystems an der Tragstruktur anzuschrauben.

Auch weist das äußere Lehnenelement 27 in Figur 2 zusätzlich Mittel 31 zur Aufnahme eines Entriegelungssystems auf. Die Mittel 31 zur Aufnahme eines Entriegelungssystems können einteilig mit der Tragstruktur 1 durch Gasinnendruck- und Wasserinjektionsverfahren hergestellt werden oder alternativ als ein zusätzliches Anbauteil an der Tragstruktur befestigt werden. Bevorzugt ist es, die Mittel 31 zur Aufnahme eines Entriegelungssystems nach Herstellung der Tragstruktur 1 mit der Tragstruktur 1 zu verbinden. Die Verbindung kann z.B. durch lösliche oder unlösliche Verbindungen erfolgen. So können die Mittel 31 zur Aufnahme eines Entriegelungssystems z.B. mit der Tragstruktur 1 verschweißt oder verklebt werden oder auch an die Tragstruktur 1 angeschraubt werden.

Das Entriegelungssystem wird insbesondere zur Befestigung der Tragstruktur 1 an einer Fahrzeugkarosserie eingesetzt. Um die Lehne verstellen zu können, ist es dann notwendig, die Verriegelung der Tragstruktur 1 mit der Karosserie durch das Entriegelungssystem zu lösen.

Schließlich sind in Figur 2 sowohl für das mittlere Lehnenelement 25 als auch für das äußere Lehnenelement 27 Kopfstützen 33 dargestellt. Die Kopfstützen 33 umfassen jeweils 2 Befestigungsstangen 35, die durch die Hülsen 23 der Vorrichtung 21 zur Aufnahme einer Kopfstütze geführt sind.

Im Unterschied zu der in Figur 1 dargestellten Ausführungsform sind beim äußeren Lehnenelement 27 die Querrippen 13 zum einen diagonal von links oben nach rechts unten ausgebildet, zum anderen verlaufen Querrippen 13 waagerecht vom ersten Hohlprofil 5 zum zweiten Hohlprofil 7.

Um einen Kindersitz mit der Tragstruktur 1 zu verbinden, sind in einer Ausführungsform unterhalb der Vorrichtung 21 zur Aufnahme einer Kopfstütze Mittel 37 zur Befestigung eines Kindersitzes vorgesehen. Diese können entweder, wie für das äußere Lehnenelement 27 dargestellt, einstückig mit der Tragstruktur 1 ausgebildet sein, oder wie für das mittlere Lehnenelement 25 dargestellt als zusätzliches Bauteil nachträglich montiert werden.

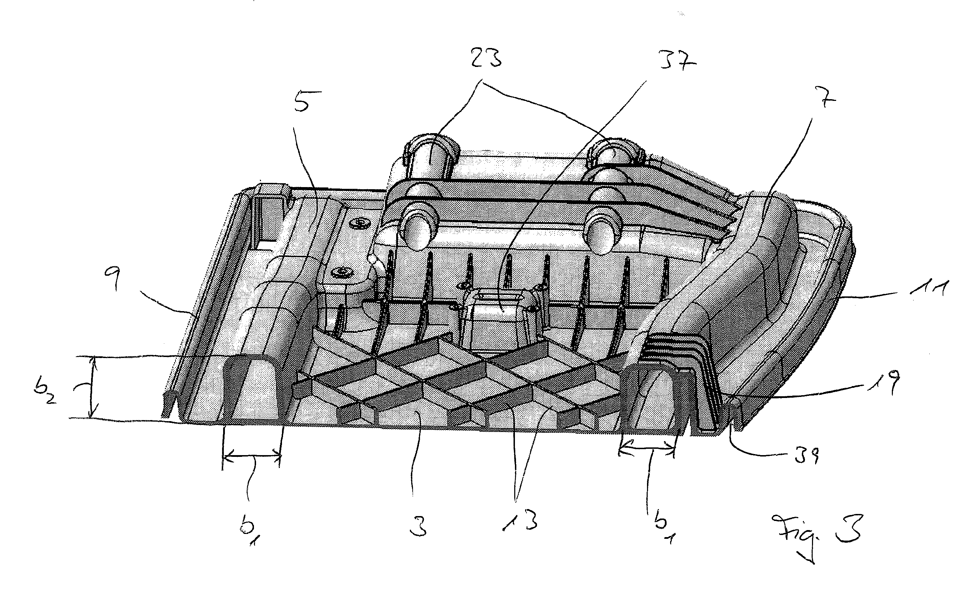

Eine dreidimensionale Schnittdarstellung durch eine Tragstruktur einer Rückenlehne eines Kraftfahrzeugs ist in Figur 3 dargestellt.

Durch die Schnittdarstellung ist die Form des ersten Hohlprofils 5 und des zweiten Hohlprofils 7 ersichtlich. In der hier dargestellten Ausführungsform haben die Hohlprofile 5,7 jeweils einen im Wesentlichen rechteckförmigen Querschnitt mit abgerundeten Ecken. Die Hohlprofile weisen jeweils eine Kantenlänge b₁ parallel zur Rückenplatte 3 und eine Kantenlänge b₂ senkrecht zur Rückenplatte 3 auf. Die Kantenlängen b₁ und b₂ liegen vorzugsweise im Bereich von 10 bis 80 mm. Die Kantenlängen b₁ und b₂ können gleich groß sein, jedoch ist es bevorzugt, wie hier dargestellt, dass die Kantenlänge b₂ etwas größer ist als die Kantenlänge b₁.

Die gesamte Rückenplatte 3 ist von einer Nut 39 umschlossen. Die Nut 39 dient zum Einhängen eines Sitzbezugs. Auch ist in Figur 3 zu sehen, dass die Rückenplatte 3 an ihrer Rückseite, abgesehen von der Nut 39, eben ist.

Neben den in den Figuren 1 bis 3 dargestellten Ausführungsformen, bei denen die Tragstruktur 1 für Rückenlehnen von Rücksitzen in Kraftfahrzeugen eingesetzt wird, ist es auch möglich, die Tragstruktur 1 für einen Fahrersitz oder Beifahrersitz in einem Kraftfahrzeug zu verwenden.
- 1: Tragstruktur
- 3: Rückenplatte
- 5: erstes Hohlprofil
- 7: zweites Hohlprofil
- 9: erste Seite
- 11: zweite Seite
- 13: Querrippe
- 15: Kreuzungspunkt
- 17: Beschlag
- 19: Querrippe
- 21: Vorrichtung zur Aufnahme einer Kopfstütze
- 23: Hülse
- 25: mittleres Lehnenelement
- 27: äußeres Lehnenelement
- 29: Vorrichtung zur Aufnahme eine Gurtsystems
- 31: Mittel zur Aufnahme eines Entriegelungssystems
- 33: Kopfstütze
- 35: Befestigungsstange
- 37: Mittel zur Befestigung eines Kindersitzes
- 39: Nut
- b₁, b₂: Kantenlängen der Hohlprofile 5,7

## Patentansprüche

1. Tragstruktur für eine Rückenlehne eines Sitzes in einem Kraftfahrzeug aus einem Polymermaterial, wobei an mindestens einer sich von oben nach unten erstreckenden Seite (9, 11) der Tragstruktur (1) ein Hohlprofil (5, 7) ausgebildet ist, das durch ein kombiniertes Gasinnendruck- und Wasserinjektionsverfahren gefertigt wird.

2. Tragstruktur gemäß Anspruch 1, **dadurch gekennzeichnet, dass** das mindestens eine Hohlprofil (5, 7) auf der Vorderseite der Tragstruktur (1) ausgebildet ist.

3. Tragstruktur gemäß Anspruch 1 oder 2, **dadurch gekennzeichnet, dass** die Tragstruktur (1) mindestens an einer Seite (9, 11) freistehend ist.

4. Tragstruktur gemäß einem der Ansprüche 1 bis 3, **dadurch gekennzeichnet, dass** die Tragstruktur (1) für eine Rückenlehne eines Rücksitzes verwendet wird.

5. Tragstruktur gemäß einem der Ansprüche 1 bis 4, **dadurch gekennzeichnet, dass** das Polymermaterial ausgewählt ist aus der Gruppe bestehend aus Polyamid, Polycarbonat, Polybutylenterephthalat, Polyethylenterephthalat, Polyethylen, Polypropylen, Styrolpolymere, Polyaramide, Polyurethane.

6. Tragstruktur gemäß einem der Ansprüche 1 bis 5, **dadurch gekennzeichnet, dass** das Polymermaterial faserverstärkt ist.

7. Tragstruktur gemäß Anspruch 6, **dadurch gekennzeichnet, dass** die Fasern ausgewählt sind aus der Gruppe bestehend aus Aramidfasern, Glasfasern und Kohlenstofffasern.

8. Tragstruktur gemäß Anspruch 6 oder 7, **dadurch gekennzeichnet, dass** die Fasern Kurzfasern sind.

9. Tragstruktur gemäß einem der Ansprüche 1 bis 8, **dadurch gekennzeichnet, dass** auf beiden Seiten (9, 11) der Tragstruktur Hohlprofile (5, 7) ausgebildet sind die Tragstruktur (1) weiterhin Querrippen (13) aufweist, die sich zwischen den Hohlprofilen (5, 7) erstrecken.

10. Tragstruktur gemäß einem der Ansprüche 1 bis 9, **dadurch gekennzeichnet, dass** die Tragstruktur (1) eine Vorrichtung (29) zur Aufnahme eines Gurtsystems umfasst.

11. Tragstruktur gemäß einem der Ansprüche 1 bis 10, **dadurch gekennzeichnet, dass** die Tragstruktur (1) durch ein Masserückdrückverfahren gefertigt wird.

12. Tragstruktur gemäß einem der Ansprüche 1 bis 11, **dadurch gekennzeichnet, dass** die Tragstruktur (1) eine Wandstärke im Bereich von 1 bis 10 mm und das mindestens eine Hohlprofil (5, 7) einen Außendurchmesser bzw. eine äußere Kantenlänge (b₁, b₂) im Bereich von 10 bis 80 mm und eine Wandstärke im Bereich von 3 bis 10 mm aufweist.

13. Verfahren zur Herstellung einer Tragstruktur (1) für eine Rückenlehne eines Sitzes in einem Kraftfahrzeug, folgende Schritte umfassend:
(a) Formen der Tragstruktur (1) aus einem Polymermaterial durch ein Spritzgießverfahren,
(b) Eindüsen eines Gases unter Druck zur Ausformung mindestens eines Hohlprofils (5, 7) entlang mindestens einer Seite (9, 11) der Tragstruktur (1).
(c) Einspritzen einer Flüssigkeit unter Druck in das mindestens eine in Schritt (b) ausgeformte Hohlprofil (5, 7).

14. Verfahren gemäß Anspruch 13, **dadurch gekennzeichnet, dass** beim Eindüsen des Gases überschüssige Schmelze des Polymermaterials in einen Heißkanal zurückgedrückt wird.

15. Verfahren gemäß Anspruch 13 oder 14, **dadurch gekennzeichnet, dass** das Gas, das in Schritt (b) eingedüst wird, Luft oder Stickstoff ist und die Flüssigkeit, die in Schritt (c) eingespritzt wird, Wasser ist.

## Geänderte Patentansprüche

### Geänderte Patentansprüche gemäss Regel 137(2) EPÜ.

**1.** Tragstruktur für eine Rückenlehne eines Sitzes in einem Kraftfahrzeug aus einem Polymermaterial, wobei an mindestens einer sich von oben nach unten erstreckenden Seite (9, 11) der Tragstruktur (1) ein Hohlprofil (5, 7) ausgebildet ist, das durch ein kombiniertes Gasinnendruck- und Wasserinjektionsverfahren gefertigt wird, und wobei die Tragstruktur (1) durch ein Masserückdrückverfahren gefertigt wird.

**2.** Tragstruktur gemäß Anspruch 1, **dadurch gekennzeichnet, dass** das mindestens eine Hohlprofil (5, 7) auf der Vorderseite der Tragstruktur (1) ausgebildet ist.

**3.** Tragstruktur gemäß Anspruch 1 oder 2, **dadurch gekennzeichnet, dass** die Tragstruktur (1) mindestens an einer Seite (9, 11) freistehend ist.

**4.** Tragstruktur gemäß einem der Ansprüche 1 bis 3, **dadurch gekennzeichnet, dass** die Tragstruktur (1) für eine Rückenlehne eines Rücksitzes verwendet wird.

**5.** Tragstruktur gemäß einem der Ansprüche 1 bis 4, **dadurch gekennzeichnet, dass** das Polymermaterial ausgewählt ist aus der Gruppe bestehend aus Polyamid, Polycarbonat, Polybutylenterephthalat, Polyethylenterephthalat, Polyethylen, Polypropylen, Styrolpolymere, Polyaramide, Polyurethane.

**6.** Tragstruktur gemäß einem der Ansprüche 1 bis 5, **dadurch gekennzeichnet, dass** das Polymermaterial faserverstärkt ist.

**7.** Tragstruktur gemäß Anspruch 6, **dadurch gekennzeichnet, dass** die Fasern ausgewählt sind aus der Gruppe bestehend aus Aramidfasern, Glasfasern und Kohlenstofffasern.

**8.** Tragstruktur gemäß Anspruch 6 oder 7, **dadurch gekennzeichnet, dass** die Fasern Kurzfasern sind.

**9.** Tragstruktur gemäß einem der Ansprüche 1 bis 8, **dadurch gekennzeichnet, dass** auf beiden Seiten (9, 11) der Tragstruktur Hohlprofile (5, 7) ausgebildet sind die Tragstruktur (1) weiterhin Querrippen (13) aufweist, die sich zwischen den Hohlprofilen (5, 7) erstrecken.

**10.** Tragstruktur gemäß einem der Ansprüche 1 bis 9, **dadurch gekennzeichnet, dass** die Tragstruktur (1) eine Vorrichtung (29) zur Aufnahme eines Gurtsystems umfasst.

**11.** Tragstruktur gemäß einem der Ansprüche 1 bis 10, **dadurch gekennzeichnet, dass** die Tragstruktur (1) durch ein Masserückdrückverfahren gefertigt wird.

**12.** Tragstruktur gemäß einem der Ansprüche 1 bis 11, **dadurch gekennzeichnet, dass** die Tragstruktur (1) eine Wandstärke im Bereich von 1 bis 10 mm und das mindestens eine Hohlprofil (5, 7) einen Außendurchmesser bzw. eine äußere Kantenlänge (b₁, b₂) im Bereich von 10 bis 80 mm und eine Wandstärke im Bereich von 3 bis 10 mm aufweist.

**13.** Verfahren zur Herstellung einer Tragstruktur (1) für eine Rückenlehne eines Sitzes in einem Kraftfahrzeug, folgende Schritte umfassend:
(a) Formen der Tragstruktur (1) aus einem Polymermaterial durch ein Spritzgießverfahren,
(b) Eindüsen eines Gases unter Druck zur Ausformung mindestens eines Hohlprofils (5, 7) entlang mindestens einer Seite (9, 11) der Tragstruktur (1),
(c) Einspritzen einer Flüssigkeit unter Druck in das mindestens eine in Schritt (b) ausgeformte Hohlprofil (5, 7),
wobei die Tragstruktur durch ein Masserückdrückverfahren gefertigt wird.

**14.** Verfahren gemäß Anspruch 13, **dadurch gekennzeichnet, dass** beim Eindüsen des Gases überschüssige Schmelze des Polymermaterials in einen Heißkanal zurückgedrückt wird.

**15.** Verfahren gemäß Anspruch 13 oder 14, **dadurch gekennzeichnet, dass** das Gas, das in Schritt (b) eingedüst wird, Luft oder Stickstoff ist und die Flüssigkeit, die in Schritt (c) eingespritzt wird, Wasser ist.
